# EUROPEAN PATENT SPECIFICATION

(11) **EP 1 815 604 B1**
(45) Date of publication and mention of the grant of the patent: **26.11.2008**
(21) Application number: 05804167.4
(22) Date of filing: 16.11.2005
(51) Int. Cl.: H04B 1/04

(54) **DEVICE COMPRISING A LOAD LINE COUPLED TO AN OUTPUT OF AN AMPLIFIER STAGE**
EINRICHTUNG MIT EINER AN EINEM AUSGANG EINER VERSTÄRKERSTUFE ANGEKOPPELTEN LASTLEITUNG
DISPOSITIF COMPRENANT UNE LIGNE DE CHARGE RELIEE A UNE SORTIE D'UN ETAGE AMPLIFICATEUR

(30) Priority: 19.11.2004 EP 04105944
(43) Date of publication of application: 08.08.2007
(73) Proprietor: Koninklijke Philips Electronics N.V., 5621 BA Eindhoven (NL)
(72) Inventor: VAN BEZOOIJEN, Adrianus, NL-5656 AA Eindhoven (NL)
(74) Representative: Epping - Hermann - Fischer
(86) International application number: PCT/IB2005/053775
(87) International publication number: WO 2006/054245

(56) References cited:
- WO-A-02/063782
- US-A1- 2002 145 483
- US-A1- 2003 096 583
- US-B1- 6 281 748

## Description

The invention relates to a device comprising a load line coupled to an output of an amplifier stage, and further relates to a controlled matching stage, to a further controlled matching stage, to a method, and to a processor program product.

Examples of such a device are mobile phones, wireless interfaces, and further transmitters and/or receivers.

A prior art device is known from WO 02/063782 A2, which discloses in its Fig. 2 a cellular phone (a device) comprising a power amplifier (an amplifier stage) coupled via a switch to an antenna. The coupling between an output of the power amplifier and the switch is called a load line. In its Figs. 6-8, WO 02/063782 A2 discloses variable matching networks (controlled matching stages). These variable matching networks match the antenna to the switch or to the power amplifier.

The known device is disadvantageous, inter alia, owing to the fact that its variable matching networks only compensate for antenna mismatches. The known device compensates a further mismatch different from an antenna mismatch to a relatively low extent.

A further prior art device is known from US 2003/0096583 A disclosing a mobile radio apparatus. A switching control unit detects the state of a switch in a signal line of an RF circuit and selects a matcing circuit to meet the detected switching condition.

It is an object of the invention, inter alia, to provide a device which compensates a further mismatch different from an antenna mismatch to a higher extent.

Furthers objects of the invention are, inter alia, to provide a controlled matching stage, a further controlled matching stage, a method and a processor program product which compensate a further mismatch different from an antenna mismatch to a higher extent.

The device according to the invention comprises a load line coupled to an output of an amplifier stage and comprises a controlled matching stage for matching the load line to the amplifier stage.

By introducing the controlled matching stage for matching the load line to the amplifier stage, the device according to the invention compensates a further mismatch in the form of a mismatch between the load line and the output of the amplifier stage to a higher extent.

The device according to the invention is further advantageous in that the controlled matching stage will improve the linearity and the efficiency of the amplifier stage, will relax reliability requirements which can be traded off against further size and/or cost reductions, and will improve the user friendliness of the device when it gets less hot than before.

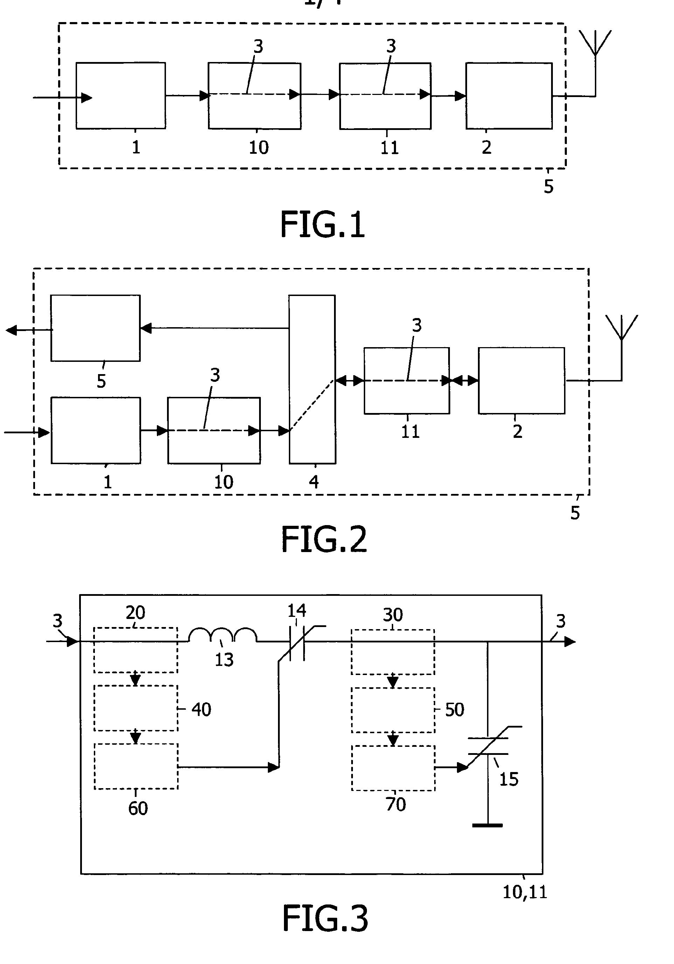

It should be noted that the article "Automatic Antenna Tuning for RF Transmitter IC Applying High Q Antenna" by Attila Zólomy, Ferenc Mernyei, János Erdélyi, Matthijs Pardoen+ and Gábor Tóth, Integration Hungary Ltd., Záhony u. 7. 1031 Budapest, Hungary, +Integration Associates Inc., 110 Pioneer Way, Unit L, Mountain View, California 94041 USA, 0-7803-8333-8/04/$20.00 (C) 2004 IEEE discloses in its Fig. 3 an antenna tuning circuitry (a controlled matching stage) for compensating for antenna mismatches. The article does not show the controlled matching stage for matching the load line to the amplifier stage.

It should further be noted that it is of common general knowledge to use a controlled impedance network at the output of the amplifier stage to adjust an impedance at the output of the amplifier stage in dependence of a mode and/or an output power of the device. A higher (lower) output power prefers a lower (higher) impedance of the load line, and a higher (lower) voltage supply prefers a higher (lower) impedance of the load line. This is completely different from automatically controlling for optimum matching the load line to the amplifier stage. According to the invention, the control of the matching of the load line to the amplifier stage may be mode dependent, but will also be done within one and the same mode, for example in dependence of an output power or a supply voltage.

A controlled matching stage is a matching stage that is (automatically) controlled, for example via a loop such as an open loop (forward control) or a closed loop

### (backward control).

An embodiment of the device according to the invention is defined by further comprising a further controlled matching stage for matching an antenna stage, which further controlled matching stage is coupled to the controlled matching stage. This further controlled matching stage will compensate for antenna mismatches. The antenna stage for example comprises an antenna and/or an antenna connection.

An embodiment of the device according to the invention is defined by the further controlled matching stage being coupled to the controlled matching stage via a switching stage. This switching stage for example comprises an input coupled via the controlled matching stage to the output of the amplifier stage (with the load line forming part of the controlled matching stage for coupling the output of the amplifier stage to the switching stage), comprises an output coupled to a receiver stage and comprises an in/output coupled via the further controlled matching stage to the antenna stage.

An embodiment of the device according to the invention is defined by the controlled matching stage comprising:
- deriving means for deriving signals from the load line;
- detecting means for detecting signal parameters of the signals; and
- controlling means for controlling adjustable impedance networks in response to said detecting for said matching.

By controlling the adjustable impedance networks, the load line is matched to the amplifier stage.

An embodiment of the device according to the invention is defined by the deriving means comprising a first element and a second element, the detecting means comprising a first detector system coupled to the first element and a second detector system coupled to the second element, and the adjustable impedance networks comprising a first adjustable impedance network controlled in response to a first detection performed by the first detector system and comprising a second adjustable impedance network controlled in response to a second detection performed by the second detector system. This controlled matching stage comprises two or more sub-stages.

An embodiment of the device according to the invention is defined by the further controlled matching stage comprising:
- deriving means for deriving signals from the load line;
- detecting means for detecting signal parameters of the signals; and
- controlling means for controlling adjustable impedance networks in response to said detecting for said matching.

By controlling the adjustable impedance networks, the antenna stage is matched to the amplifier stage.

An embodiment of the device according to the invention is defined by the deriving means comprising a first element and a second element, the detecting means comprising a first detector system coupled to the first element and a second detector system coupled to the second element, and the adjustable impedance networks comprising a first adjustable impedance network controlled in response to a first detection performed by the first detector system and comprising a second adjustable impedance network controlled in response to a second detection performed by the second detector system. This further controlled matching stage comprises two or more sub-stages.

An embodiment of the device according to the invention is defined by at least one detector system comprising a first peak detector for detecting peak information about one of the signals, a second peak detector for detecting peak information about an other one of the signals and a phase detector for detecting phase information about the signals. The first detector systems for example detect a phase difference between the signals. The second detector systems for example detect a peak value of each one of the signals and a sine and a cosine of the phase difference between the signals. Each phase detector may be a linear phase detector or a non-linear phase detector.

Embodiments of the controlled matching stage according to the invention and of the further controlled matching stage according to the invention and of the method according to the invention and of the processor program product according to the invention correspond with the embodiments of the device according to the invention.

The invention is based upon an insight, inter alia, that a further mismatch different from an antenna mismatch may occur in a device, and is based upon a basic idea, inter alia, that this further mismatch needs to be compensated.

The invention solves the problem, inter alia, to provide a device which compensates a further mismatch different from an antenna mismatch to a higher extent, and is advantageous, inter alia, in that the controlled matching stage will improve the linearity and the efficiency of the amplifier stage, will relax reliability requirements which can be traded off against further size and/or cost reductions, and will improve the user friendliness of the device when it gets less hot than before.

These and other aspects of the invention will be apparent from and elucidated with reference to the embodiments(s) described hereinafter.

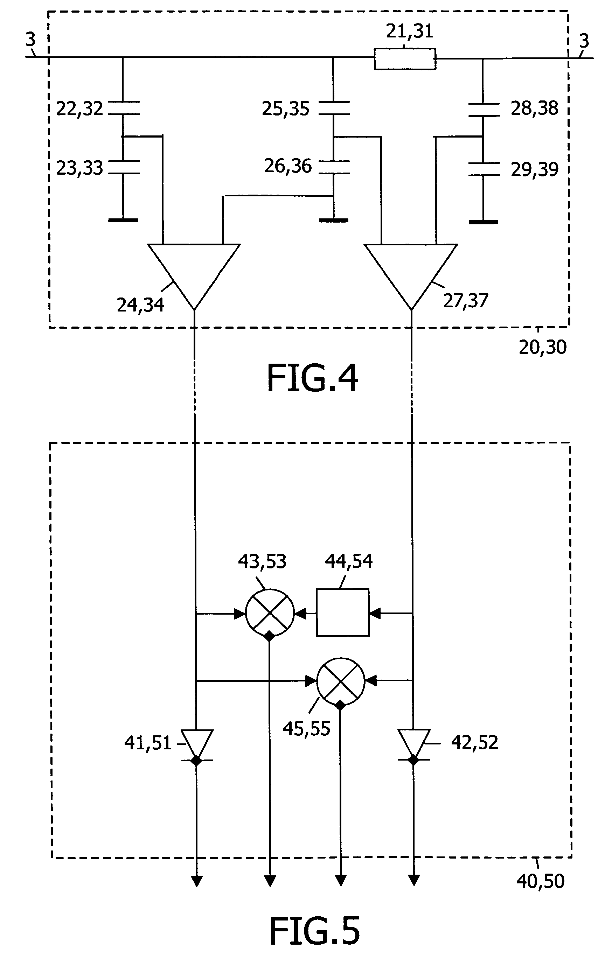

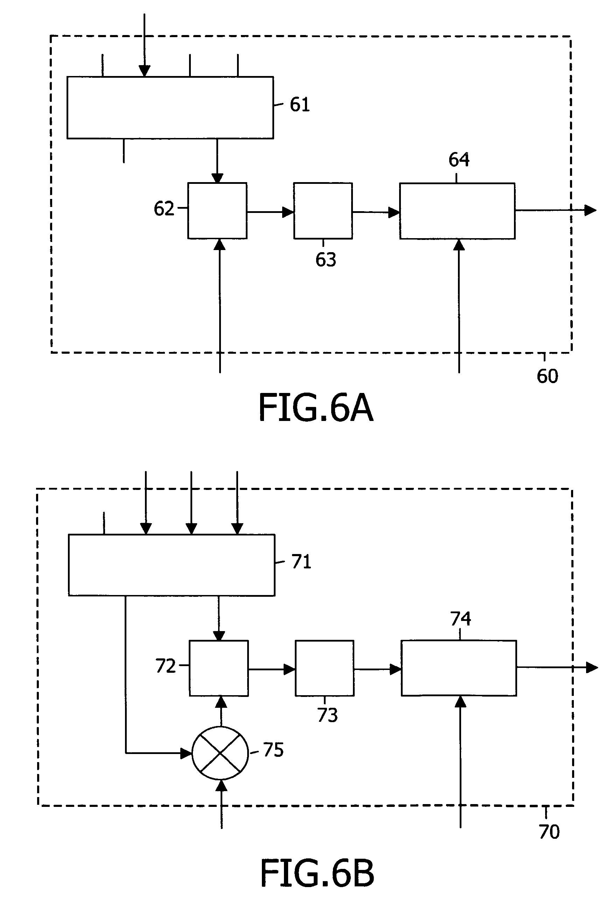

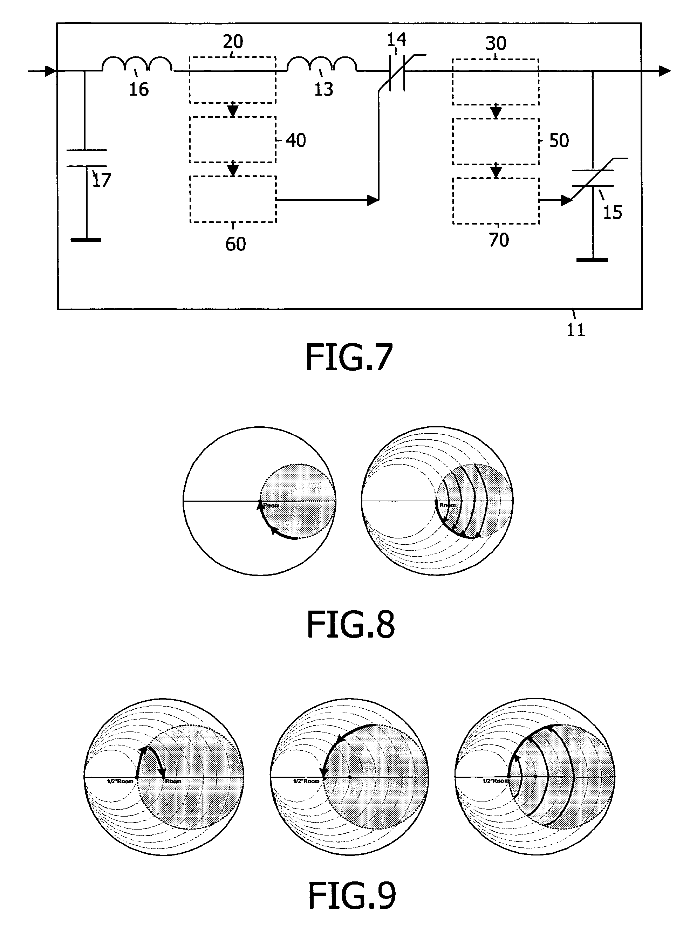

In the drawings:
Fig. 1 shows diagrammatically a device according to the invention comprising an amplifier stage, a controlled matching stage according to the invention, a further controlled matching stage according to the invention and an antenna stage;
Fig. 2 shows diagrammatically a device according to the invention comprising an amplifier stage, a controlled matching stage according to the invention, a switching stage, a further controlled matching stage according to the invention and an antenna stage;
Fig. 3 shows diagrammatically a (further) controlled matching stage according to the invention in greater detail for use in a device according to the invention;
Fig. 4 shows diagrammatically a first (second) part of deriving means for the (further) controlled matching stage of Fig. 3 in greater detail;
Fig. 5 shows diagrammatically a first (second) detector system of detecting means for the (further) controlled matching stage of Fig. 3 in greater detail;
Fig. 6 shows diagrammatically a first part (A) and a second part (B) of controlling means for the (further) controlled matching stage of Fig. 3 in greater detail;
Fig. 7 shows diagrammatically a further controlled matching stage according to the invention in greater detail for use in a device according to the invention;
Fig. 8 shows Smith charts for the (further) controlled matching stage of Fig. 3; and
Fig. 9 shows Smith charts for the further controlled matching stage of Fig. 7.
   The device 5 according to the invention shown in Fig. 1 comprises an amplifier stage 1, a controlled matching stage 10 according to the invention, a further controlled matching stage 11 according to the invention and an antenna stage 2. An output of the amplifier stage 1 is coupled to an input of the controlled matching stage 10, and an output of the controlled matching stage 10 is coupled to an input of the further controlled matching stage 11. An output of the further controlled matching stage 11 is coupled to an input of the antenna stage 2. In practice, the output of the amplifier stage 1 is coupled via a load line 3 to the input of the antenna stage 2, with both controlled matching stages 10,11 interfering with this load line 3. The amplifier stage 1 for example comprises a power transistor, and the antenna stage 2 for example comprises an antenna and/or an antenna connection.
   The device 5 according to the invention shown in Fig. 2 comprises an amplifier stage 1, a controlled matching stage 10 according to the invention, a switching stage 4, a receiver stage 5, a further controlled matching stage 11 according to the invention and an antenna stage 2. An output of the amplifier stage 1 is coupled to an input of the controlled matching stage 10, and an output of the controlled matching stage 10 is coupled to an input of the switching stage 4. An in/output of the switching stage 4 is coupled via the further controlled matching stage 11 to an in/output of the antenna stage 2. In practice, the output of the amplifier stage 1 is coupled via a load line 3 to the in/output of the antenna stage 2, with both controlled matching stages 10,11 and the switching stage 4 interfering with this load line 3. An output of the switching stage 4 is coupled to an input of the receiver stage 5.
   The (further) controlled matching stage 10 (11) according to the invention shown in Fig. 3 comprises deriving means 20,30 for deriving signals from the load line 3, detecting means 40,50 for detecting signal parameters of the signals, and controlling means 60,70 for controlling adjustable impedance networks 14,15 in response to said detecting for said matching. A series circuit of an inductor 13 and the adjustable impedance network 14 (an adjustable capacitor bank) are coupled to an output of a first part of the deriving means 20 and interrupt the load line 3 and are coupled to an input of a second part of the deriving means 30, of which an output is coupled via the adjustable impedance network 15 (an adjustable capacitor bank) to ground.
   The first (second) part of the deriving means 20 (30) is shown in Fig. 4 and comprises a first (second) element 21 (31) such as a resistor. An input side of the element 21 (31) is coupled via a series circuit of capacitors 22 (32) and 23 (33) to ground, a common point of this series circuit is coupled to a first input of an amplifier 24 (34), of which a second input is coupled to ground. The input side of the element 21 (31) is further coupled via a series circuit of capacitors 25 (35) and 26 (36) to ground, a common point of this series circuit is coupled to a first input of an amplifier 27 (37). An output side of the element 21 (31) is coupled via a series circuit of capacitors 28 (38) and 29 (39) to ground, a common point of this series circuit is coupled to a second input of the amplifier 27 (37). Both amplifiers 24,27 (34,37) generate the signals derived from the load line 3. These signals are supplied to the first (second) part of the detecting means 40 (50). Instead of the passive elements 21 (31), other passive elements such as inductors and capacitors and even (partly) non-passive elements might be used and are therefore not to be excluded.
   The first (second) detector system 40 (50) is shown in Fig. 5 and comprises a first peak detector 41 (51) such as a diode for receiving the derived signal from the amplifier 24 (34) and comprises a second peak detector 42 (52) such as a diode for receiving the derived signal from the amplifier 27 (37). An input of the first peak detector 41 (51) is coupled to a first input of a first mixer 43 (53) and an input of the second peak detector 41 (52) is coupled via a phase shifter 44 (54) to a second input of the first mixer 43 (53). An input of the first peak detector 41 (51) is coupled to a first input of a second mixer 45 (55) and an input of the second peak detector 41 (52) is coupled to a second input of the second mixer 45 (55). The first peak detector 41 (51) for example generates an amplitude value of a voltage present at the load line 3 at the first (second) part of the detecting means 40 (50), the second peak detector 42 (52) for example generates an amplitude value of a current flowing through the load line 3 at the first (second) part of the detecting means 40 (50), the first mixer 43 (53) for example generates a product of both amplitude values and a sine of a detected phase value and divided by the value two (further to be called sine product), and the second mixer 45 (55) for example generates a product of both amplitude values and a cosine of a detected phase value and divided by the value two (further to be called cosine product).
   The first part of the controlling means 60 shown in Fig. 6A comprises a calculator 61 for receiving the sine product from the first mixer 43 and for supplying this sine product to a negative input of an adder 62. This adder 62 comprises a positive input for receiving a reference phase signal such as for example zero degrees from a base band control not shown and an output for supplying a difference signal via a limiter 63 to a controller 64 such as a counter. This controller 64 receives an enable signal from the base band control not shown and controls the adjustable impedance network 14. The enable signal for example comprises a pulse with a rising edge for loading the up/down value into the counter and a falling edge for performing the up/down counting.
   The second part of the controlling means 70 shown in Fig. 6B comprises a calculator 71 for receiving the sine product from the first mixer 53 and for receiving the cosine product from the second mixer 55 and for receiving the amplitude value of the current from the second peak detector 52. The calculator 71 divides the cosine product by a square of the amplitude of the current and supplies a resulting signal to a negative input of an adder 72. This adder comprises a positive input coupled to an output of a multiplier 75. This multiplier 75 receives from the calculator 71 a sign of the sine product and receives from the base band control not shown a nominal resistance value. The adder 72 supplies a difference signal via a limiter 73 to a controller 74 such as a counter. This controller 74 receives an enable signal from the base band control not shown and controls the adjustable impedance network 15. The enable signal for example comprises a pulse with a rising edge for loading the up/down value into the counter and a falling edge for performing the up/down counting. The nominal resistance value is the resistance value to be achieved at the load line 3 at the input of the first part of the deriving means 20.
   The further controlled matching stage 11 according to the invention shown in Fig. 7 differs only from the one shown in Fig. 3 in that at the load line 3 at the input of the first part of the deriving means 20 an inductor 16 is coupled in serial to this input. One side of this inductor 16 is coupled to this input, and an other side is coupled to ground via a capacitor 17. To function properly, the multiplier 75 should now receive a fraction of the nominal resistance value, such as for example half the nominal resistance value, which fraction of the nominal resistance value is the resistance value to be achieved at the load line 3 at the input of the first part of the deriving means 20. At a common point of the inductor 16 and the capacitor 17, then the original resistance value will be achieved by impedance up-conversion with a same fraction.
   Fig. 8 shows Smith charts for the (further) controlled matching stage 10,11 of Fig. 3. An adaptive impedance down-conversion can be achieved by the (further) controlled matching stage 10,11. It can for example be used to compensate the imaginary part of a mismatched antenna and to transform the antenna series resistance towards a lower series resistance. The second detector system 50 detects the magnitude of the sensed voltage and current to determine the magnitude of the matched impedance |Z_{matched}|. Moreover, it determines the sine and cosine of the phase difference phi between voltage and current. Properly combining the second detector system output signals gives the matched resistance R_{matched} = Aᵤ/Aᵢ cos(phi). This detected resistance is compared to the nominal resistance value that is set at Rnom. However, the term cos(phi) is symmetric around zero and therefore has two solutions: one is capacitive and the other inductive. To obtain a unique solution the sign of the sin(phi) is used as multiplication factor of the nominal resistance value Rnom that represent the resistance value to which the loop controls. Given the properties of a capacitive shunt network, the right-hand side loop controls, towards this reference resistance, over circle segments of constant parallel conductance, as is visualized in the right-hand side Smith chart of Fig. 8. The control loop on the left-hand side uses as control criterion sin(phi)=0. Consequently, it tunes the capacitor such that the total reactance becomes zero and thus resulting in the desired impedance equal to Rnom. An interpretation of the Smith charts is as follows. The parallel adjustable impedance network 15 is tuned to obtain a matched series resistance R_{matched} equal to Rnom. It results in a capacitive reactance that is compensated by tuning the series LC network (inductor 13 + adjustable impedance network 14) such that the phase becomes equal to the reference phase signal phi_ref that is set to zero.
   Fig. 9 shows Smith charts for the further controlled matching stage of Fig. 7. An alternative implementation applies a combination of an adaptive-L down-conversion network combined with a fixed up-conversion network. For example, adaptively converting antenna impedances down to Rnom/2 can be combined by a fixed up-conversion of a factor of 2. The fixed part of the network could be made part of the (fixed) matching network that is normally used to match the antenna impedance to the collector of the power transistor. Advantages are firstly that the adaptive network converts the impedance downwards and thus in the direction that is needed for collector matching. Therefore, the fixed part of the network can more easily be absorbed into a classical output matching network. Secondly there is no need for re-configuration between up and down conversion saving switches or control complexity. Thirdly only two detectors are needed compared to three in case of an adaptive-T or an adaptive-PI construction not shown. Fourthly, compared to the adaptive-T or the adaptive-PI construction not shown, a simple control algorithm can be used. Another advantage is that a larger impedance adaptation range is obtained compared to the embodiment shown in Fig. 3, which is visualized by the gray areas of the Smith charts.
   About the first and second detector systems 40,50 shown in Fig. 5, they comprise linear phase detectors (mixers 43,53,45,55). By introducing limiters at the inputs of the mixers 43,53,45,55, non-linear phase detectors are created. Further, certain parts of these detector systems 40,50 can be avoided in view of the first part of the controlling means 60 only using one out of four output signals from the first detector system 40 and in view of the second part of the controlling means 70 only using three out of four output signals from the second detector system 50.
   Other impedance network constructions than the one shown in Fig. 3,7 and consisting of the inductor 13 and the adjustable impedance networks 14,15 are possible without departing from the scope of this invention, such as for example the adaptive-T or the adaptive-PI construction mentioned above. And instead of the two sub-stages shown in Fig. 3,7 (20,40,60,13,14 on the one hand and 30,50,70,15 on the other hand), only one sub-stage with for example a series LC network or a parallel LC network or three or more sub-stages are possible without departing from the scope of this invention. The controlled matching stage 10 for matching the load line 3 to the amplifier stage 1 does not necessarily need to be used in combination with the further controlled matching stage 11 for matching an antenna stage 2. For example in case of the antenna stage 2 suffering relatively little from mismatches, the further controlled matching stage 11 can be avoided.
   It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. Device (5) comprising a signal line (3) coupled to an output of an amplifier stage (1) and comprising a controlled matching stage (10) for matching the signal line (3) to the amplifier stage (1), further comprising a further controlled matching stage (11) for matching an antenna stage (2), which further controlled matching stage (11) is coupled to the controlled matching stage (10) via a switching stage (4), the controlled matching stage (10) comprising: deriving means (20,30) for deriving signals from the signal line (3); - detecting means (40,50) for detecting signal parameters of the signals; and controlling means (60,70) for controlling adjustable impedance networks (14,15) in response to said detecting for said matching.

2. Device (5) according to claim 1, wherein the further controlled matching stage (11) comprises: deriving means (20,30) for deriving signals from the signal line (3); - detecting means (40,50) for detecting signal parameters of the signals; and controlling means (60,70) for controlling adjustable impedance networks (14,15) in response to said detecting for said matching.

3. Device (5) according to claim 1 or 2, the deriving means (20,30) comprising a first element (21) and a second element (31), the detecting means (40,50) comprising a first detector system (40) coupled to the first element (21) and a second detector system (50) coupled to the second element (31), and the adjustable impedance networks (14,15) comprising a first adjustable impedance network (14) controlled in response to a first detection performed by the first detector system (40) and comprising a second adjustable impedance network (15) controlled in response to a second detection performed by the second detector system (50).

4. Device (5) according to claim 3, the deriving means (20,30) comprising a first element (21) and a second element (31), the detecting means (40,50) comprising a first detector system (40) coupled to the first element (21) and a second detector system (50) coupled to the second element (31), and the adjustable impedance networks (14,15) comprising a first adjustable impedance network (14) controlled in response to a first detection performed by the first detector system (40) and comprising a second adjustable impedance network (15) controlled in response to a second detection performed by the second detector system (50).

5. Device (5) according to claim 2 or 4, at least one detector system (40,50) comprising a first peak detector (41,51) for detecting peak information about one of the signals, a second peak detector (42,52) for detecting peak information about an other one of the signals and a phase detector (43,53,45,55) for detecting phase information about the signals.

## Patentansprüche

1. Vorrichtung (5) umfassend eine an einen Ausgang einer Verstärkerstufe (1) angekoppelte Signalleitung (3) und umfassend eine gesteuerte Anpassungsstufe (10) zum Anpassen der Signalleitung (3) an die Verstärkerstufe (1), weiterhin umfassend eine weitere gesteuerte Anpassungsstufe (11) zum Anpassen einer Antennenstufe (2), welche weitere gesteuerte Anpassungsstufe (11) über eine Schaltstufe (4) an die gesteuerte Anpassungsstufe (10) angekoppelt ist, wobei die gesteuerte Anpassungsstufe (10) folgendes umfaßt: Ableitungsmittel (20, 30) zum Ableiten von Signalen von der Signalleitung (3);-Erkennungsmittel (40, 50) zum Erkennen von Signalparametern der Signale; und Steuermittel (60, 70) zum Steuern einstellbarer Impedanznetzwerke (14, 15) als Reaktion auf die Erkennung für das Anpassen.

2. Vorrichtung (5) nach Anspruch 1, wobei die weitere gesteuerte Anpassungsstufe (11) folgendes umfaßt: Ableitungsmittel (20, 30) zum Ableiten von Signalen von der Signalleitung (3); - Erkennungsmittel (40, 50) zum Erkennen von Signalparametern der Signale; und Steuermittel (60, 70) zum Steuern einstellbarer Impedanznetzwerke (14, 15) als Reaktion auf das Erkennen für das Anpassen.

3. Vorrichtung (5) nach Anspruch 1 oder 2, wobei das Ableitungsmittel (20, 30) ein erstes Element (21) und ein zweites Element (31) umfaßt, wobei das Erkennungsmittel (40, 50) ein an das erste Element (21) angekoppeltes erstes Detektorsystem (40) und ein an das zweite Element (31) angekoppeltes zweites Detektorsystem (50) umfaßt, und die einstellbaren Impedanznetzwerke (14, 15) ein als Reaktion auf eine durch das erste Detektorsystem (40) durchgeführte erste Erkennung gesteuertes erstes einstellbares Impedanznetzwerk (14) umfaßt und ein als Reaktion auf eine durch das zweite Detektorsystem (50) durchgeführte zweite Erkennung gesteuertes zweites einstellbares Impedanznetzwerk (15) umfaßt.

4. Vorrichtung (5) nach Anspruch 3, wobei das Ableitungsmittel (20, 30) ein erstes Element (21) und ein zweites Element (31) umfaßt, wobei das Erkennungsmittel (40, 50) ein an das erste Element (21) angekoppeltes erstes Detektorsystem (40) und ein an das zweite Element (31) angekoppeltes zweites Detektorsystem (50) umfaßt, und die einstellbaren Impedanznetzwerke (14, 15) ein als Reaktion auf eine durch das erste Detektorsystem (40) durchgeführte erste Erkennung gesteuertes erstes einstellbares Impedanznetzwerk (14) umfaßt und ein als Reaktion auf eine durch das zweite Detektorsystem (50) durchgeführte zweite Erkennung gesteuertes zweites einstellbares Impedanznetzwerk (15) umfaßt.

5. Vorrichtung (5) nach Anspruch 2 oder 4, wobei mindestens ein Detektorsystem (40, 50) einen ersten Spitzendetektor (41, 51) zum Erkennen von Spitzeninformationen über eines der Signale, einen zweiten Spitzendetektor (42, 52) zum Erkennen von Spitzeninformationen über ein anderes der Signale und einen Phasendetektor (43, 53, 45, 55) zum Erkennen von Phaseninformationen über die Signale umfaßt.

## Revendications

1. Dispositif ( 5 ) comprenant une ligne ( 3 ) de signal reliée à une sortie d'un étage ( 1 ) amplificateur et comprenant un étage ( 10 ) commandé d'adaptation pour adapter la ligne ( 3 ) de signal à l'étage ( 1 ) amplificateur, comprenant en outre un autre étage ( 11 ) commandé d'adaptation pour adapter un étage ( 2 ) d'antenne, cet autre étage ( 11 ) commandé d'adaptation étant relié à l'étage ( 10 ) commandé d'adaptation par un étage ( 4 ) de commutation, l'étage ( 10 ) commandé d'adaptation comprenant : des moyens ( 20, 30 ) de dérivation pour dériver des signaux de la ligne ( 3 ) de signal ; des moyens ( 40, 50 ) de détection pour détecter les paramètres des signaux ; et des moyens ( 60, 70 ) de commande pour commander des réseaux ( 14, 15 ) réglables d'impédance en réponse à ladite détection pour ladite adaptation.

2. Dispositif ( 5 ) suivant la revendication 1, dans lequel
l'autre étage ( 11 ) commandé d'adaptation comprend :
des moyens ( 20, 30 ) de dérivation pour dériver des signaux de la ligne ( 3 ) de signal ; des moyens ( 40, 50 ) de détection pour détecter des paramètres des signaux ; et des moyens ( 60, 70 ) de commande pour commander des réseaux ( 14, 15 ) réglables d'impédance en réponse à ladite détection pour ladite adaptation.

3. Dispositif ( 5 ) suivant la revendication 1 ou 2, les moyens ( 20, 30 ) de dérivation comprenant un premier élément ( 21 ) et un second élément ( 31 ), les moyens ( 40, 50 ) de détection comprenant un premier système ( 40 ) de détecteur relié au premier élément ( 21 ) et un deuxième système ( 50 ) de détecteur relié au deuxième élément ( 31 ), et les réseaux ( 14, 15 ) réglables d'impédance comprenant un premier réseau ( 14 ) réglable d'impédance commandé en réponse à une première détection effectuée par le premier système ( 40 ) de détecteur et comprenant un deuxième réseau ( 15 ) réglable d'impédance commandé en réponse à une deuxième détection effectuée par le deuxième système ( 50 ) de détecteur.

4. Dispositif ( 5 ) suivant la revendication 3, les moyens ( 20, 30 ) de dérivation comprenant un premier élément ( 21 ) et un deuxième élément ( 31 ), les moyens ( 40, 50 ) de détection comprenant un premier système ( 40 ) de détecteur relié au premier élément ( 21 ) et un deuxième système ( 50 ) de détecteur relié au deuxième élément ( 31 ), et les réseaux ( 14, 15 ) réglables d'impédance comprenant un premier réseau ( 14 ) réglable d'impédance commandé en réponse à une première détection effectuée par le premier système ( 450 ) de détecteur et comprenant un deuxième réseau ( 15 ) réglable d'impédance commandé en réponse à une deuxième détection effectuée par le deuxième système ( 50 ) de détecteur.

5. Dispositif ( 5 ) suivant la revendication 2 ou 4, au moins un système ( 40, 50 ) de détecteur comprenant un premier détecteur ( 41, 51 ) de pic pour détecter une information de pic sur l'un des signaux, un deuxième détecteur ( 42, 52 ) de pic pour détecter une information de pic sur un autre des signaux et un détecteur ( 43, 53, 45, 55 ) de phase pour détecter une information de phase sur les signaux.
